# EUROPEAN PATENT APPLICATION

(11) **EP 4 738 520 A1**
(43) Date of publication of application: **06.05.2026**
(21) Application number: 23943004.4
(22) Date of filing: 30.06.2023
(51) Int. Cl.: H01M 10/058, H01M 10/052

(54) **BATTERY CELL AND ELECTRIC DEVICE**

(71) Applicant: Xiamen Ampace Technology Limited, Xiamen City, Fujian Province 361000 (CN)
(72) Inventor: JIANG, Jing, Xiamen, Fujian 361000 (CN)
(74) Representative: Kraus & Lederer PartGmbB
(86) International application number: PCT/CN2023/105146
(87) International publication number: WO 2025/000509

(57) **Abstract**

A cell and an electric device are provided. The cell includes an electrode assembly, where the electrode assembly includes a positive electrode plate, a negative electrode plate, a positive electrode tab, and a negative electrode tab. The positive electrode plate includes a positive electrode active material region, and the negative electrode plate includes a negative electrode active material region; along a width direction of the positive electrode plate, the positive electrode active material region has a first end and a second end opposite to each other, and the positive electrode tab protrudes from the first end; along a width direction of the negative electrode plate, the negative electrode active material region has a first region extending beyond the first end and a second region extending beyond the second end, the negative electrode tab is connected to the first region, a width of the first region is denoted as E, a width of the second region is denoted as C, and E > C. This enables the housing to reserve more space for the electrolyte on the tab side of the negative electrode active material region and the tab side of the positive electrode active material region without increasing the volume of the housing. In this way, the positive electrode plate and the negative electrode plate may be fully infiltrated, thereby endowing the cell with relatively good cycling performance and a relatively high volumetric energy density.

## Description

### TECHNICAL FIELD

The present application relates to the field of battery technologies, and specifically, to a cell and an electric device.

### BACKGROUND

Cells are widely applied in fields such as portable electronic devices, electric vehicles, power tools, unmanned aerial vehicles, and energy storage devices. With the increasingly wide and complex range of applications, higher requirements have been placed on the energy density of cells.

### SUMMARY

Some embodiments of the present application provide a cell and an electric device to enable the cell to have a high volumetric energy density.

According to a first aspect, an embodiment of the present application provides a cell, where the cell includes an electrode assembly, the electrode assembly includes a positive electrode plate, a negative electrode plate, a positive electrode tab, and a negative electrode tab, the positive electrode tab is electrically connected to the positive electrode plate, the negative electrode tab is electrically connected to the negative electrode plate, the positive electrode plate includes a positive electrode active material region, and the negative electrode plate includes a negative electrode active material region; along a width direction of the positive electrode plate, the positive electrode active material region has a first end and a second end opposite to each other, and the positive electrode tab protrudes from the first end; and along a width direction of the negative electrode plate, the negative electrode active material region has a first region extending beyond the first end and a second region extending beyond the second end, the negative electrode tab is connected to the first region, a width of the first region is denoted as E, a width of the second region is denoted as C, and E > C.

In the above technical solution, the positive electrode tab protrudes from the first end of the positive electrode active material region, the first end corresponds to a tab side of the positive electrode active material region, and the second end corresponds to a non-tab side of the positive electrode active material region; the first region of the negative electrode active material region extends beyond the first end, the negative electrode tab is connected to the first region, the first region corresponds to a tab side of the negative electrode active material region, and the second region corresponds to a non-tab side of the negative electrode active material region; and the width E of the first region and the width C of the second region meet E > C, to be specific, the width of the portion of the negative electrode active material region on the tab side that extends beyond the tab side of the positive electrode active material region is greater than the width of the portion of the negative electrode active material region on the non-tab side that extends beyond the non-tab side of the positive electrode active material region. In this way, the position of the electrode assembly within a housing of the cell may be adjusted, such that along the width direction of the positive electrode plate, a distance between the first end and a wall portion of the housing is greater than a distance between the second end and a wall portion of the housing, thereby reserving more space for the electrolyte on the tab side of the negative electrode active material region and the tab side of the positive electrode active material region without increasing the volume of the housing. In this way, the positive electrode plate and the negative electrode plate may be fully infiltrated, thereby endowing the cell with relatively good cycling performance and endowing the cell with a relatively high volumetric energy density.

In some embodiments of the first aspect of the present application, 1.05 ≤ E/C ≤ 10.

In the above technical solution, if E/C < 1.05, the degree to which the width of the portion of the negative electrode active material region on the tab side extending beyond the tab side of the positive electrode active material region is greater than the width of the portion of the negative electrode active material region on the non-tab side extending beyond the non-tab side of the positive electrode active material region is relatively small. Consequently, a distance between the first end and the wall portion of the housing is relatively small, and space reserved in the housing for the electrolyte on the tab side of the negative electrode active material region and the tab side of the positive electrode active material region is relatively small, increasing the risk that the positive electrode plate and the negative electrode plate may not be fully infiltrated. If E/C > 10, the width of the portion of the negative electrode active material region on the tab side extending beyond the tab side of the positive electrode active material region is much greater than the width of the portion of the negative electrode active material region on the non-tab side extending beyond the non-tab side of the positive electrode active material region. Consequently, a distance between the first end and the wall portion of the housing is excessively large and a distance between the second end and the wall portion of the housing is excessively small. Moreover, the space reserved in the housing for the electrolyte on the tab side of the negative electrode active material region and the tab side of the positive electrode active material region is relatively large, such that the amount of electrolyte accommodated exceeds the amount required for fully infiltrating the positive electrode plate and the negative electrode plate, potentially leading to material and space waste; and the space reserved in the housing for the electrolyte on the non-tab side of the negative electrode active material region and the non-tab side of the positive electrode active material region is relatively small, which may result in insufficient infiltration of the positive electrode plate and the negative electrode plate on the non-tab side of the negative electrode active material region and of the non-tab side of the positive electrode active material region. Therefore, 1.05 ≤ E/C ≤ 10 ensures that the space reserved in the housing for the electrolyte on the tab side and the non-tab side of the negative electrode active material region and the space reserved in the housing for the electrolyte on the positive electrode active material region are both reasonable, enabling the positive electrode plate and the negative electrode plate to be fully infiltrated, endowing the cell with relatively good cycling performance, reducing material waste, saving costs, and minimizing waste of internal space in the housing. In this way, the space within the housing is fully utilized, thereby increasing the volumetric energy density of the cell.

In some embodiments of the first aspect of the present application, 1.1 ≤ E/C ≤ 4.

In the above technical solution, 1.1 ≤ E/C ≤ 4 enables the cell to have better cycling performance, further reduces material waste, further saves costs, and further minimizes waste of internal space in the housing. In this way, the space within the housing is fully utilized, thereby increasing the volumetric energy density of the cell.

In some embodiments of the first aspect of the present application, the cell further includes an insulating member, where at least a portion of the insulating member is located between the first region and the positive electrode tab.

In the above technical solution, at least a portion of the insulating member being located between the first region and the positive electrode tab may separate the first region and the positive electrode tab, reduce the risk of short circuits caused by burrs on the positive electrode tab piercing a separator and thus leading to contact between the positive electrode tab and the first region, and improve the safety performance of the cell.

In some embodiments of the first aspect of the present application, along the width direction of the negative electrode plate, the first region has a third end facing away from the second region, and the insulating member extends beyond the third end in a direction away from the positive electrode active material region.

In the above technical solution, along the width direction of the negative electrode plate, the insulating member extends beyond the third end of the first region facing away from the second region in a direction away from the positive electrode active material region, enabling the insulating member not only to separate the first region and the positive electrode tab but also to separate the negative electrode tab and the positive electrode tab, reducing the risk of short circuits caused by burrs on the positive electrode tab and the negative electrode tab piercing the separator and thus leading to contact between the positive electrode tab and the negative electrode tab, and further improving the safety performance of the cell.

In some embodiments of the first aspect of the present application, along the width direction of the negative electrode plate, the insulating member has a third region extending beyond the third end, where a width of the third region is denoted as F, and 0 < (E + C)/2 - F ≤ 5 mm.

In the above technical solution, if (E + C)/2 - F > 5 mm, the width of the insulating member is too large, and the insulating member occupies excessive space, that is, occupying more space on the tab side that is intended for accommodating electrolyte, leading to a relatively high risk that the positive electrode plate and the negative electrode plate may not be fully infiltrated, and making it unfavorable for the cell to achieve high volumetric energy density. Therefore, 0 < (E + C)/2 - F ≤ 5 mm not only may effectively separate the first region and the positive electrode tab, reduce the risk of short circuits in the cell caused by the positive electrode tab piercing the separator, but also may minimize the occupation of space for accommodating the electrolyte on the tab side. In this way, the positive electrode plate and the negative electrode plate may be better infiltrated by the electrolyte, improving the cycling performance of the cell, and facilitating a high volumetric energy density for the cell.

In some embodiments of the first aspect of the present application, 0.1 mm ≤ (E + C)/2 - F ≤ 1 mm.

In the above technical solution, if (E + C)/2 - F < 0.1 mm, the insulating member may not effectively separate the first region and the positive electrode tab; 0.1 mm ≤ (E + C)/2 - F ≤ 1 mm enables the insulating member to effectively separate the first region and the positive electrode tab, reducing the risk of short circuits in the cell caused by burrs on the positive electrode tab piercing the separator, and also enabling the cell to have a more optimal volumetric energy density.

In some embodiments of the first aspect of the present application, one end of the insulating member is in contact with the first end.

In the above technical solution, one end of the insulating member being in contact with the first end may increase the coverage area of the insulating member, better separate the first region and the positive electrode tab, further reduce the risk of short circuits in the cell, and improve the safety performance of the cell.

In some embodiments of the first aspect of the present application, the cell further includes a housing, where the electrode assembly is accommodated in the housing, the housing has a first wall and a second wall arranged opposite to each other, the first end faces the first wall, and the second end faces the second wall; and a distance between the first region and the first wall is denoted as K₁, a distance between the second region and the second wall is denoted as K₂, and K₁ > K₂.

In the above technical solution, the first end corresponds to the tab side of the positive electrode active material region, the second end corresponds to the non-tab side of the positive electrode active material region, the first region corresponds to the tab side of the negative electrode active material region, the second region corresponds to the non-tab side of the negative electrode active material region, and K₁ and K₂ meet K₁ > K₂, to be specific, the distance between the tab side of the negative electrode active material region and the wall portion of the housing is greater than the distance between the non-tab side of the negative electrode active material region and the wall portion of the housing. In this way, more space in the housing is reserved for the electrolyte on the tab side of the negative electrode active material region, enabling the positive electrode plate and the negative electrode plate to be fully infiltrated, thereby endowing the cell with relatively good cycling performance and endowing the cell with a relatively high volumetric energy density.

In some embodiments of the first aspect of the present application, the cell further includes an insulating member, where at least a portion of the insulating member is located between the first region and the positive electrode tab; and the insulating member has a fourth end facing the first wall, a distance between the fourth end and the first wall is denoted as K₃, and K₃ > K₂.

In the above technical solution, K₃ > K₂ ensures that more space in the housing is reserved for the electrolyte on the tab side of the positive electrode active material region, enabling the positive electrode plate and the negative electrode plate to be fully infiltrated, thereby endowing the cell with relatively good cycling performance.

In some embodiments of the first aspect of the present application, the electrode assembly further includes a separator, where the separator is configured to separate the positive electrode plate and the negative electrode plate, and along the width direction of the positive electrode plate, a width of a portion of the separator extending beyond the first end is denoted as L₁, a width of a portion of the separator extending beyond the second end is denoted as L₂, and 0 < L₁ - L₂ ≤ 8 mm.

In the above technical solution, 0 < L₁ - L₂, that is, L₁ > L₂, since the width E of the first region of the negative electrode active material region extending beyond the first end and the width C of the second region extending beyond the second end meet E > C, L₁ > L₂ ensures that the width of the portion of the separator extending beyond the first end and the width of the portion extending beyond the second end match the width of the first region and the width of the second region, respectively, enabling the separator to better separate the positive electrode plate and the negative electrode plate, better mitigating the issue of a short circuit in the cell, thereby improving the safety performance of the cell; and if L₁ - L₂ > 8 mm, the dimension of the separator in the width direction of the positive electrode plate is too large, and the separator occupies excessive space inside the housing, which is unfavorable for full infiltration of the positive electrode plate and the negative electrode plate and for the cell to achieve high energy density. Therefore, L₁ - L₂ ≤ 8 mm enables the separator to effectively separate the positive electrode plate and the negative electrode plate, reduces the risk of short circuits in the cell, and also minimizes the dimension of the separator in the width direction of the positive electrode plate. In this way, the space occupied by the separator inside the housing is minimized, and the housing has more space for the electrolyte inside, facilitating full infiltration of the positive electrode plate and the negative electrode plate, improving the cycling performance of the cell, and facilitating a high energy density for the cell.

In some embodiments of the first aspect of the present application, 1 mm ≤ L₁ - L₂ ≤ 3 mm.

In the above technical solution, 1 mm ≤ L₁ - L₂ ≤ 3 mm enables the separator to more effectively separate the positive electrode plate and the negative electrode plate, further reduces the risk of short circuits in the cell, and also minimizes the dimension of the separator in the width direction of the positive electrode plate. In this way, the space occupied by the separator inside the housing is minimized, and the housing has more space for the electrolyte inside, facilitating full infiltration of the positive electrode plate and the negative electrode plate, endowing the cell with better cycling performance, and facilitating a high energy density for the cell.

According to a second aspect, an embodiment of the present application provides an electric device, where the electric device includes the cell provided in any embodiment of the first aspect.

### BRIEF DESCRIPTION OF DRAWINGS

To more clearly illustrate the technical solutions in some embodiments of the present application, the accompanying drawings used in these embodiments will be briefly described below. It should be understood that the accompanying drawings below only show some embodiments of the present application and should not be considered as limiting the scope. For those skilled in the art, other related drawings may be obtained based on these drawings without creative efforts.
FIG. 1 is a schematic structural diagram of a cell provided in some embodiments of the present application;
FIG. 2 is a cross-sectional view along direction A1-A1 in FIG. 1;
FIG. 3 is a cross-sectional view along direction A2-A2 in FIG. 1;
FIG. 4 is a schematic structural diagram of a positive electrode plate, a negative electrode plate, and a separator that are stacked and in an unfolded state provided in some embodiments of the present application;
FIG. 5 is a view of the positive electrode plate, negative electrode plate, and separator that are stacked and in an unfolded state along a length direction of the positive electrode plate provided in some embodiments of the present application;
FIG. 6 is a schematic diagram of the connection of a positive electrode plate and a positive electrode tab provided in some embodiments of the present application (viewed along a thickness direction of the positive electrode plate);
FIG. 7 is a schematic diagram of the connection of a positive electrode plate and a positive electrode tab provided in some embodiments of the present application (viewed along the length direction of the positive electrode plate);
FIG. 8 is a schematic diagram of the connection of a positive electrode plate and a positive electrode tab provided in some other embodiments of the present application (viewed along the thickness direction of the positive electrode plate);
FIG. 9 is a schematic diagram of the connection of a positive electrode plate and a positive electrode tab provided in some other embodiments of the present application (viewed along the length direction of the positive electrode plate);
FIG. 10 is a schematic diagram of the connection of a positive electrode plate and a positive electrode tab provided in some further embodiments of the present application (viewed along the thickness direction of the positive electrode plate);
FIG. 11 is a cross-sectional view along direction A3-A3 in FIG. 10;
FIG. 12 is a schematic diagram of the connection of a positive electrode plate and a positive electrode tab provided in still some other embodiments of the present application (viewed along the thickness direction of the positive electrode plate);
FIG. 13 is a schematic diagram of the connection of a positive electrode plate and a positive electrode tab provided in still some other embodiments of the present application (viewed along the length direction of the positive electrode plate);
FIG. 14 is a schematic diagram of the connection of a positive electrode plate and a positive electrode tab provided in yet some other embodiments of the present application (viewed along the thickness direction of the positive electrode plate);
FIG. 15 is a schematic diagram of the connection of a positive electrode plate and a positive electrode tab provided in yet some other embodiments of the present application (viewed along the length direction of the positive electrode plate);
FIG. 16 is a schematic diagram of the connection of a positive electrode plate and a positive electrode tab provided in still some further embodiments of the present application (viewed along the thickness direction of the positive electrode plate);
FIG. 17 is a schematic structural diagram of a positive electrode plate, a negative electrode plate, and a separator that are stacked and in an unfolded state provided in still other embodiments of the present application;
FIG. 18 is a view of the positive electrode plate, negative electrode plate, and separator that are stacked and in an unfolded state along the length direction of the positive electrode plate provided in still some other embodiments of the present application; and
FIG. 19 is a view of the positive electrode plate, negative electrode plate, and separator that are stacked and in an unfolded state along the length direction of the positive electrode plate provided in some further embodiments of the present application.

reference signs: 100: cell; 10: electrode assembly; 11: positive electrode plate; 111: positive electrode active material region; 1111: first end; 1112: second end; 112: positive electrode current collector; 1121: coated region; 1122: uncoated region; 113: positive electrode active material layer; 12: negative electrode plate; 121: negative electrode active material region; 1211: first region; 12111: third end; 1212: second region; 122: negative electrode current collector; 123: negative electrode active material layer; 1231: first mounting groove; 13: positive electrode tab; 131: first riveting portion; 132: first limiting portion; 14: negative electrode tab; 15: separator; 20: insulating member; 21: third region; 30: housing; 31: first wall; 32: second wall; 40: first electrode lead; 50: second electrode lead; X1: width direction of positive electrode plate; X2: width direction of negative electrode plate; Y1: length direction of positive electrode plate; Y2: length direction of negative electrode plate; Z1: thickness direction of positive electrode plate; Z2: thickness direction of negative electrode plate; and P: gap.

### DETAILED DESCRIPTION

To make the objectives, technical solutions, and advantages of some embodiments of the present application clearer, the technical solutions in these embodiments of the present application will be clearly and completely described below with reference to the accompanying drawings in these embodiments of the present application. Obviously, the described embodiments are a part of these embodiments of the present application, but not all of them. The components of these embodiments of the present application described and shown in the accompanying drawings herein may generally be arranged and designed in various different configurations.

Therefore, the detailed description of some embodiments of the present application provided in the accompanying drawings below is not intended to limit the scope of the present application as claimed, but merely represents selected embodiments of the present application. Based on these embodiments in the present application, all other embodiments obtained by those skilled in the art without creative efforts fall within the scope of protection of the present application.

It should be noted that, in the absence of conflict, some embodiments and features in these embodiments of the present application may be combined with each other.

It should be noted that similar reference signs and letters indicate similar items in the accompanying drawings below, so once an item is defined in one drawing, it does not need to be further defined or explained in subsequent drawings.

In the description of some embodiments of the present application, it should be noted that the indicated orientation or positional relationship is based on the orientation or positional relationship shown in the accompanying drawings, or the orientation or positional relationship in which the product of the present application is conventionally placed during use, or the orientation or positional relationship conventionally understood by those skilled in the art, and is only for the convenience of describing the present application and simplifying the description, rather than indicating or implying that the device or element referred to must have a specific orientation, be constructed or operated in a specific orientation, and therefore should not be construed as limiting the present application. In addition, the terms "first," "second," "third," or the like are only used for distinguishing descriptions and should not be construed as indicating or implying relative importance.

Currently, from the perspective of market trends, the application of cells is becoming increasingly widespread. Cells are widely used in electric vehicles such as electric bicycles, electric motorcycles, and electric cars, as well as power tools, unmanned aerial vehicles, energy storage devices, and other fields. As the application areas of cells continue to swell, the market demand for them is also continuously increasing.

A cell includes a housing and an electrode assembly, where the electrode assembly is accommodated in the housing. The electrode assembly includes a positive electrode plate, a negative electrode plate, and a separator, where the positive electrode plate, the separator, and the negative electrode plate are stacked, and the separator is configured to insulate and separate the positive electrode plate and the negative electrode plate, so as to reduce the risk of short circuits in the cell.

During the design process of a cell, both ends of the negative electrode plate in its width direction need to extend beyond both ends of the positive electrode plate in its width direction to provide sufficient space for ions deintercalated from the positive electrode plate to intercalate, thereby reducing the risk of lithium precipitation. In conventional wound or laminated electrode assemblies, the amounts by which both ends of the negative electrode plate in its width direction extend beyond both ends of the positive electrode plate in its width direction are substantially equal, and the electrode assembly is generally centered within the housing, so substantially equal spaces need to be reserved on both sides of the negative electrode plate in its width direction to reduce the risk of interference between the negative electrode plate and the housing.

Typically, a positive electrode tab is connected to one end of the positive electrode plate in a width direction of the positive electrode plate, and a negative electrode tab is connected to one end of the negative electrode plate in a width direction of the negative electrode plate, with the positive electrode tab and the negative electrode tab extending on the same side. The bending and taping of the positive electrode tab and the negative electrode tab require significant space, which reduces the space available for accommodating the electrolyte on the tab side within the housing, leading to issues such as poor infiltration and cycling performance of the positive electrode plate and the negative electrode plate, and even safety issues such as the tab being inserted backward into the electrode plate during electrode assembly insertion into the housing. To reserve sufficient space for the electrolyte and reduce the risk of backward tab insertion, it is necessary to increase the internal space of the housing to obtain more energy density space, which results in an excessively large housing size, thereby decreasing the volumetric energy density of the cell.

Based on the above considerations, to mitigate the issue of low volumetric energy density in cells, an embodiment of the present application provides a cell, where an electrode assembly of the cell includes a positive electrode plate, a negative electrode plate, a positive electrode tab, and a negative electrode tab, the positive electrode tab is electrically connected to the positive electrode plate, the negative electrode tab is electrically connected to the negative electrode plate, the positive electrode plate includes a positive electrode active material region, and the negative electrode plate includes a negative electrode active material region; along a width direction of the positive electrode plate, the positive electrode active material region has a first end and a second end opposite to each other, and the positive electrode tab protrudes from the first end; and along a width direction of the negative electrode plate, the negative electrode active material region has a first region extending beyond the first end and a second region extending beyond the second end, the negative electrode tab is connected to the first region, a width of the first region is denoted as E, a width of the second region is denoted as C, and E > C.

The positive electrode tab protrudes from the first end of the positive electrode active material region, the first end corresponds to a tab side of the positive electrode active material region, and the second end corresponds to a non-tab side of the positive electrode active material region; the first region of the negative electrode active material region extends beyond the first end, the negative electrode tab is connected to the first region, the first region corresponds to a tab side of the negative electrode active material region, and the second region corresponds to a non-tab side of the negative electrode active material region; and the width E of the first region and the width C of the second region meet E > C, to be specific, the width of the portion of the negative electrode active material region on the tab side that extends beyond the tab side of the positive electrode active material region is greater than the width of the portion of the negative electrode active material region on the non-tab side that extends beyond the non-tab side of the positive electrode active material region. In this way, the position of the electrode assembly within the housing of the cell may be adjusted, such that along the width direction of the positive electrode plate, a distance between the first end and a wall portion of the housing is greater than a distance between the second end and a wall portion of the housing. In this way, more space in the housing is reserved for the electrolyte on the tab side of the negative electrode active material region and the tab side of the positive electrode active material region without increasing the volume of the housing, enabling the positive electrode plate and the negative electrode plate to be fully infiltrated, thereby endowing the cell with relatively good cycling performance and endowing the cell with a relatively high volumetric energy density. Since the distance between the first end and the wall portion of the housing is large, this may also reduce the safety issue of the tab being inserted into the electrode plate due to tab bending during electrode assembly insertion into the housing.

The cell disclosed in some embodiments of the present application may be used, but is not limited to, in electric devices such as electric two-wheeled vehicles, power tools, unmanned aerial vehicles, and energy storage devices. A cell meeting the conditions of the present application may also be used as the power system of an electric device, which helps improve the safety performance of the cell and the electrical safety of the electric device.

An embodiment of the present application provides an electric device using a cell as a power source, where the electric device may be, but is not limited to, electronic devices, power tools, electric vehicles, unmanned aerial vehicles, and energy storage devices. The electronic devices may include mobile phones, tablets, laptops, or the like, the power tools may include electric drills, electric saws, or the like, and the electric vehicles may include electric cars, electric motorcycles, electric bicycles, or the like.

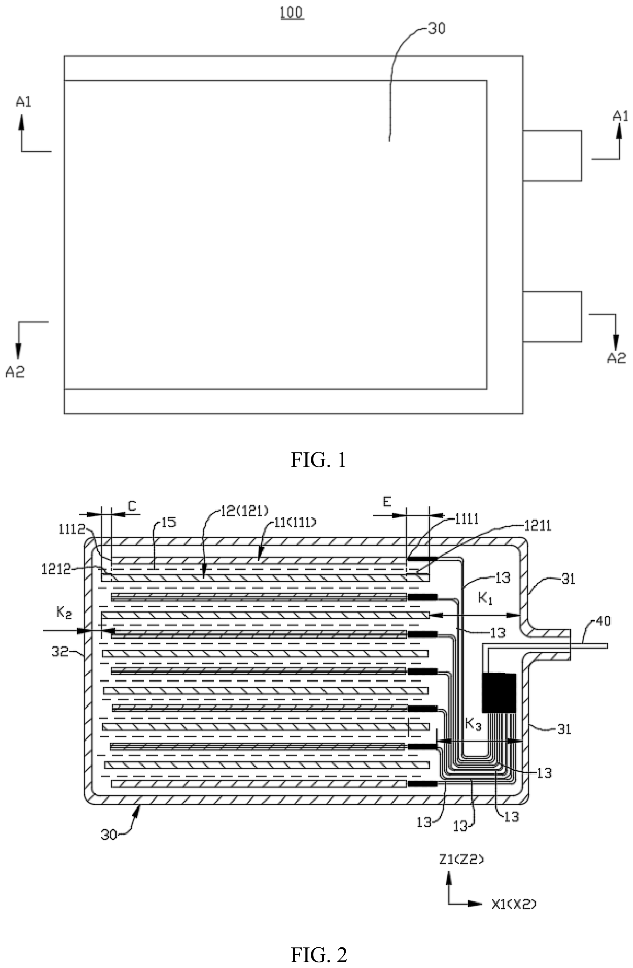

As shown in FIGs. 1 to 3, the cell 100 includes an electrode assembly 10, where the electrode assembly 10 includes a positive electrode plate 11, a negative electrode plate 12, a positive electrode tab 13, and a negative electrode tab 14, the positive electrode tab 13 is electrically connected to the positive electrode plate 11, the negative electrode tab 14 is electrically connected to the negative electrode plate 12, the positive electrode plate 11 includes a positive electrode active material region 111, and the negative electrode plate 12 includes a negative electrode active material region 121; along a width direction X1 of the positive electrode plate, the positive electrode active material region 111 has a first end 1111 and a second end 1112 opposite to each other, and the positive electrode tab 13 protrudes from the first end 1111; and along a width direction X2 of the negative electrode plate, the negative electrode active material region 121 has a first region 1211 extending beyond the first end 1111 and a second region 1212 extending beyond the second end 1112, the negative electrode tab 14 is connected to the first region 1211, a width of the first region 1211 is denoted as E, a width of the second region 1212 is denoted as C, and E > C.

The electrode assembly 10 may be a laminated structure or a wound structure. In an embodiment where the electrode assembly 10 is a laminated structure, the positive electrode plate 11, the separator 15, and the negative electrode plate 12 are stacked more than one times in a certain order, and the positive electrode tab 13 electrically connected to the positive electrode plate 11 and the negative electrode tab 14 electrically connected to the negative electrode plate 12 extend along the same side of the electrode assembly 10.

In an embodiment where the electrode assembly 10 is a wound structure, the positive electrode plate 11, the separator 15, and the negative electrode plate 12 are stacked in a certain order and then wound to form a wound structure, and the positive electrode tab 13 electrically connected to the positive electrode plate 11 and the negative electrode tab 14 electrically connected to the negative electrode plate 12 extend along the same side of the electrode assembly 10.

The positive electrode active material region 111 of the positive electrode plate 11 is a region having a positive electrode active material layer 113. The first end 1111 and the second end 1112 of the positive electrode active material layer 113 are two end surfaces of the positive electrode active material region 111 aligned with the edges of the positive electrode active material layer 113 along the width direction X1 of the positive electrode plate.

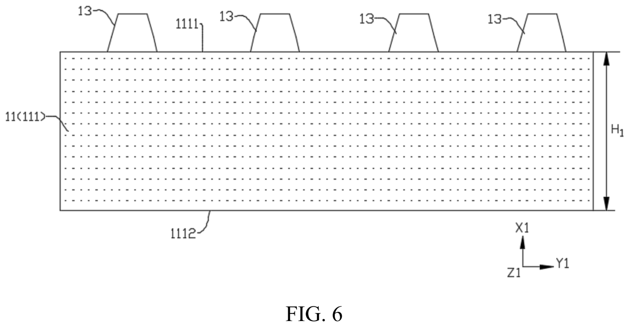

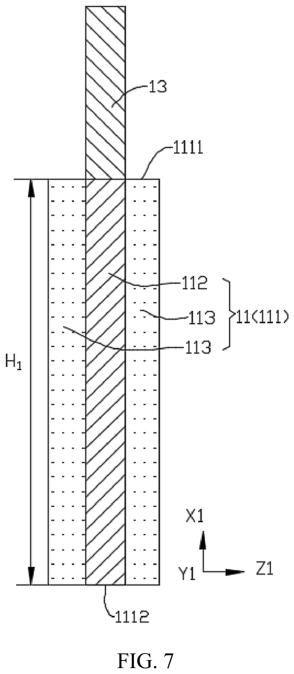

The positive electrode plate 11 includes a positive electrode current collector 112 and a positive electrode active material layer 113. In some embodiments, both sides of the positive electrode current collector 112 in the thickness direction are fully coated with the positive electrode active material layer 113, and the edges of the positive electrode current collector 112 are aligned with the edges of the positive electrode active material layer 113. The positive electrode tab 13 and the positive electrode plate 11 are separately disposed, and the positive electrode tab 13 and the positive electrode plate 11 may be electrically connected by means such as conductive adhesive bonding, welding, or riveting. In an embodiment where the positive electrode tab 13 and the positive electrode plate 11 are separately disposed, as shown in FIGs. 6 and 7, the positive electrode tab 13 may be connected to the first end 1111 of the positive electrode active material region 111, and when viewed along the thickness direction Z1 of the positive electrode plate, the positive electrode tab 13 does not overlap with the positive electrode active material region 111, avoiding an increase in the dimension of the electrode assembly 10 due to overlap between the positive electrode tab 13 and the positive electrode active material region 111, which is beneficial to increasing the volumetric energy density of the cell 100.

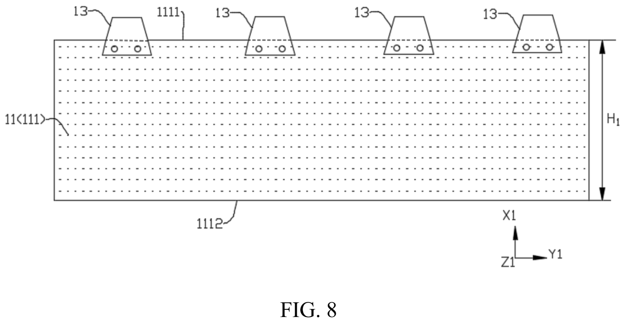

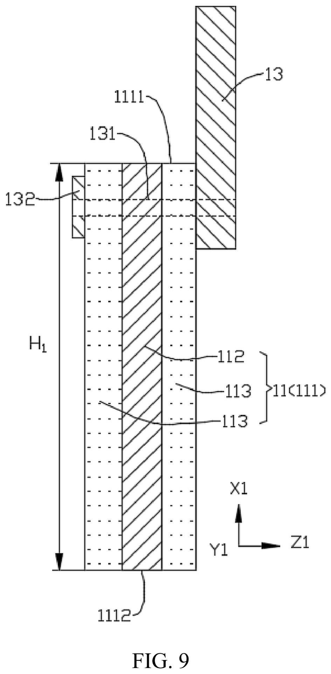

In an embodiment where the positive electrode tab 13 and the positive electrode plate 11 are separately disposed, as shown in FIGs. 8 to 11, when viewed along the thickness direction Z1 of the positive electrode plate, the positive electrode tab 13 overlaps with the positive electrode active material region 111, thereby achieving electrical connection between the positive electrode tab 13 and the positive electrode plate 11, and the positive electrode tab 13 protrudes from the first end 1111 of the positive electrode active material region 111 along the width direction X1 of the positive electrode plate, facilitating the connection of the separately disposed positive electrode tab 13 and positive electrode plate 11. As shown in FIGs. 8 and 9, when viewed along the length direction Y1 of the positive electrode plate, the positive electrode tab 13 is disposed on a side of the positive electrode active material layer 113 facing away from the positive electrode current collector 112, a portion of the positive electrode active material layer 113 is stacked between the positive electrode tab 13 and the positive electrode current collector 112, and the positive electrode tab 13 and the positive electrode plate 11 are riveted to achieve electrical connection between the positive electrode tab 13 and the positive electrode plate 11. There are various methods for riveting the positive electrode tab 13 and the positive electrode plate 11, for example, along the thickness direction Z1 of the positive electrode plate, the positive electrode tab 13 is stacked on the side of the positive electrode active material layer 113 facing away from the positive electrode current collector 112, and a punch needle passes sequentially through the positive electrode tab 13, the positive electrode active material layer 113, the positive electrode current collector 112, and another positive electrode active material layer 113 from the side of the positive electrode tab 13 facing away from the positive electrode plate 11; during the process of the punch needle passing through the positive electrode tab 13 and the positive electrode plate 11, due to the ductility of the material of the positive electrode tab 13, the positive electrode tab 13 forms a first riveting portion 131, where the first riveting portion 131 follows the punch needle to pass sequentially through the positive electrode active material layer 113, the positive electrode current collector 112, and the another positive electrode active material layer 113 and protrudes from the side surface of the positive electrode plate 11 facing away from the positive electrode tab 13. The portion of the first riveting portion 131 protruding from the side surface of the positive electrode plate 11 facing away from the positive electrode tab 13 is flattened such that one end of the first riveting portion 131 forms a first limiting portion 132 pressing against the side surface of the positive electrode plate 11 facing away from the positive electrode tab 13, thereby achieving riveting of the positive electrode tab 13 and the positive electrode plate 11.

In some other embodiments, the positive electrode tab 13 and the positive electrode plate 11 may alternatively be riveted by a first rivet. The first rivet passes through the positive electrode tab 13 and the positive electrode plate 11, and both ends of the first rivet are flattened to form a first limiting structure pressing against the surface of the positive electrode tab 13 facing away from the positive electrode plate 11 and a second limiting structure pressing against the surface of the positive electrode plate 11 facing away from the positive electrode tab 13.

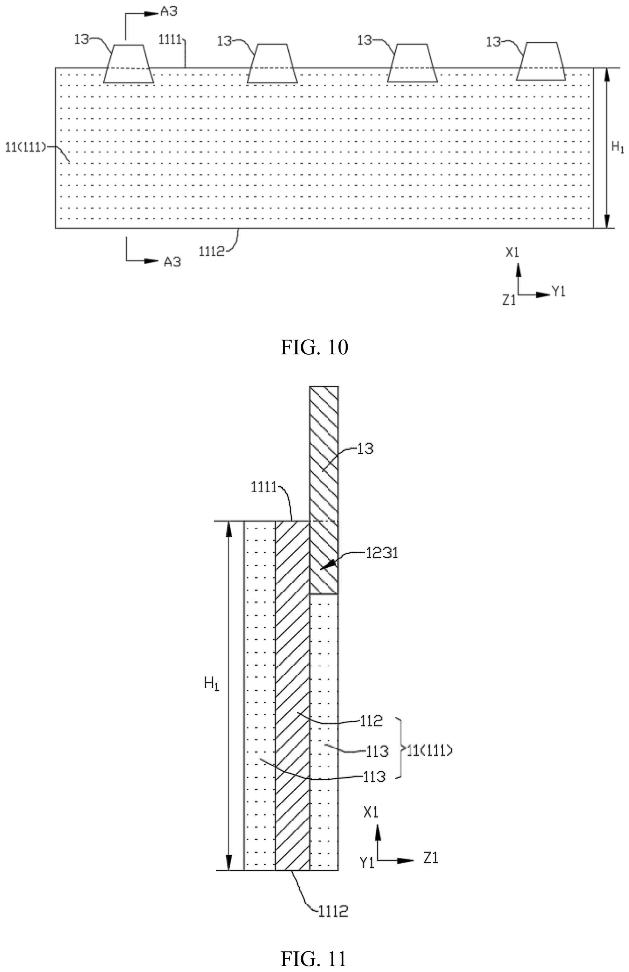

As shown in FIGs. 10 and 11, a first mounting groove 1231 may also be provided on the positive electrode active material layer 113 on one side of the positive electrode current collector 112, where a depth of the first mounting groove 1231 is the same as the thickness of the positive electrode active material layer 113. The first mounting groove 1231 is configured to accommodate a portion of the positive electrode tab 13, and the positive electrode tab 13 protrudes from the first end 1111 along the width direction X1 of the positive electrode plate from the first mounting groove 1231. The positive electrode tab 13 in the first mounting groove 1231 may be connected to the positive electrode current collector 112 to achieve the electrical connection between the positive electrode tab 13 and the positive electrode current collector 112. The positive electrode tab 13 and the positive electrode current collector 112 may be electrically connected by means such as conductive adhesive bonding or welding.

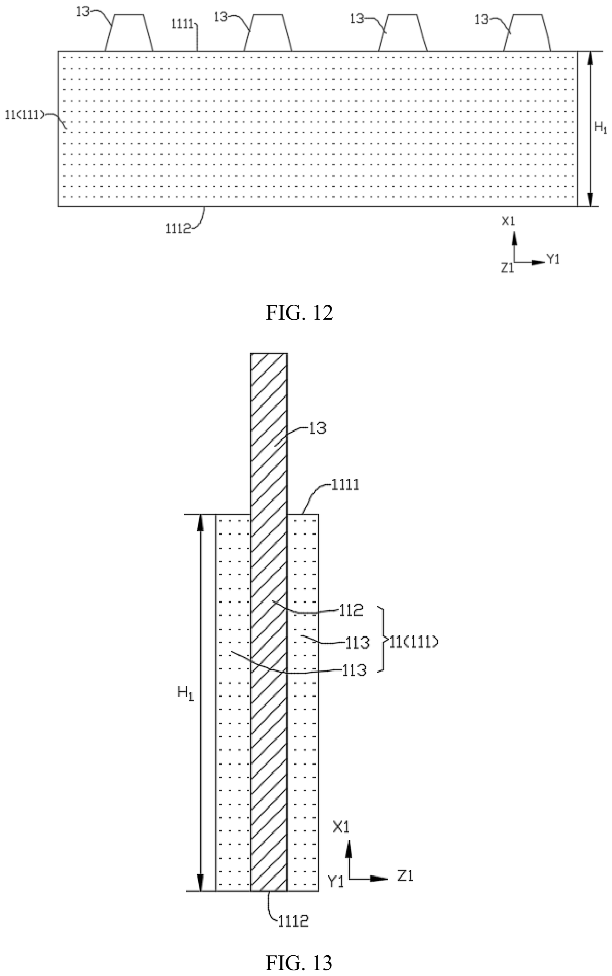

As shown in FIGs. 12 to 15, in some embodiments, along the width direction of the positive electrode current collector 112, the positive electrode current collector 112 has a coated region 1121 coated with the positive electrode active material layer 113 and an uncoated region 1122 not coated with the positive electrode active material layer 113, where the coated region 1121 and the positive electrode active material layer 113 together form the positive electrode active material region 111 of the positive electrode plate 11, and at least a portion of the uncoated region 1122 may form the positive electrode tab 13. For example, by die-cutting the uncoated region 1122, the uncoated region 1122 forms a plurality of positive electrode tabs 13 arranged at intervals, i.e. a portion of the uncoated region 1122 forms the positive electrode tab 13.

As shown in FIGs. 12 and 13, during the die-cutting process, along the width direction of the positive electrode current collector 112, the die-cutting position may be aligned with the edge of the positive electrode active material layer 113 along the width direction of the positive electrode current collector 112, and the root of the positive electrode tab 13 is located at the edge of the coated region 1121.

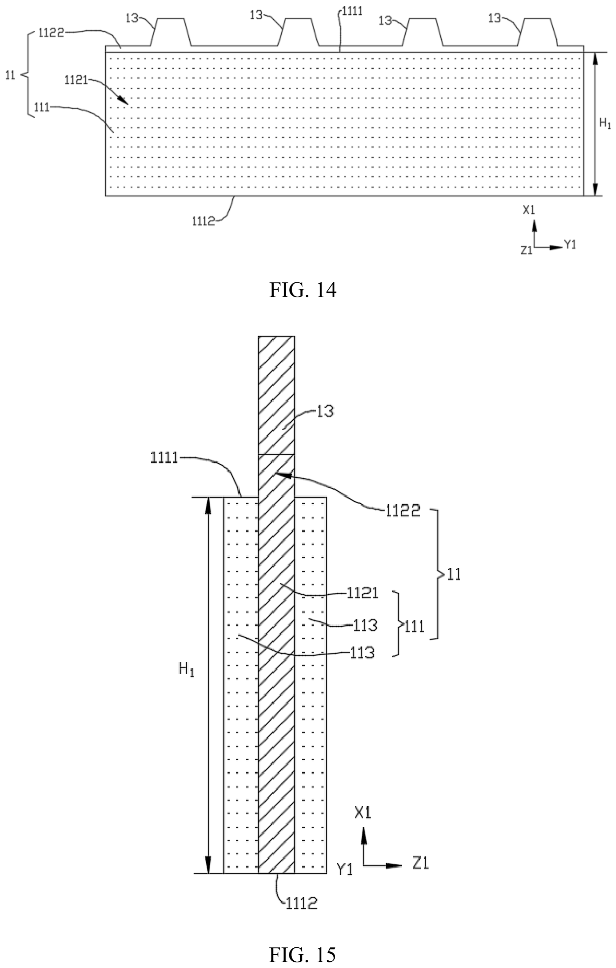

As shown in FIGs. 14 and 15, during the die-cutting process, along the width direction of the positive electrode current collector 112, the die-cutting position may alternatively not be aligned with the edge of the positive electrode active material layer 113 along the width direction of the positive electrode current collector 112, reducing the risk of damaging the positive electrode active material layer 113 during die-cutting, and the positive electrode plate 11 includes the positive electrode active material region 111 and a portion of the uncoated region 1121 of the positive electrode current collector 112. Along the width direction of the positive electrode current collector 112, there is a distance between the root of the positive electrode tab 13 and the edge of the coated region 1121. It should be noted that the width direction of the positive electrode current collector 112 is parallel to the width direction X1 of the positive electrode plate.

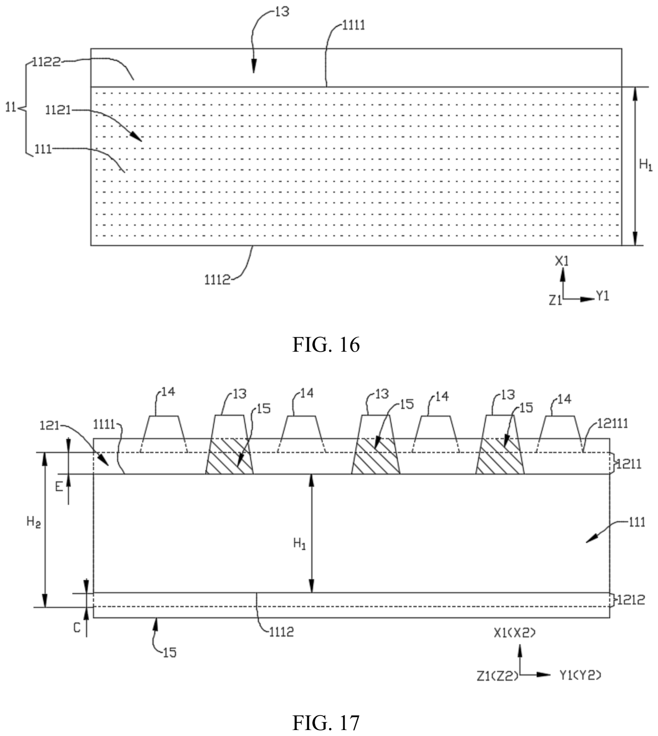

As shown in FIG. 16, in some embodiments, the entire uncoated region 1122 of the positive electrode current collector 112 may form the positive electrode tab 13, forming a full-tab cell.

In an embodiment where at least a portion of the uncoated region 1122 of the positive electrode current collector 112 forms the positive electrode tab 13, it may be understood that the positive electrode tab 13 and the positive electrode plate 11 are integrally formed.

It should be noted that, along the length direction Y1 of the positive electrode plate, the positive electrode active material layer 113 may be applied on the positive electrode current collector 112 in a continuous coating manner or may be applied on the positive electrode current collector 112 in a gap coating manner.

Taking a lithium-ion cell 100 as an example, the material of the positive electrode current collector 112 may be aluminum, and the positive electrode active material layer 113 may be lithium cobalt oxide, lithium iron phosphate, ternary lithium, lithium manganate, or the like. In an embodiment where the positive electrode tab 13 and the positive electrode plate 11 are separately disposed and then electrically connected, the material of the positive electrode tab 13 may be the same as or different from the material of the positive electrode current collector.

The negative electrode active material region 121 of the negative electrode plate 12 is a region having a negative electrode active material layer 123. The negative electrode plate 12 includes a negative electrode current collector 122 and a negative electrode active material layer 123. The accompanying drawings for the connection method and relative positional relationship between the negative electrode tab 14 and the negative electrode plate 12 may refer to the accompanying drawings for the connection method and relative positional relationship between the positive electrode plate 11 and the positive electrode tab 13.

In some embodiments, both sides of the negative electrode current collector 122 in the thickness direction are fully coated with the negative electrode active material layer 123, and the edges of the negative electrode current collector 122 are aligned with the edges of the negative electrode active material layer 123. The negative electrode tab 14 and the negative electrode plate 12 are separately disposed, and the negative electrode tab 14 and the negative electrode plate 12 may be electrically connected by means such as conductive adhesive bonding, welding, or riveting.

In an embodiment where the negative electrode tab 14 and the negative electrode plate 12 are separately disposed, the negative electrode tab 14 may be connected to an end of the first region 1211 of the negative electrode active material region 121 facing away from the second region 1212, and when viewed along the thickness direction Z2 of the negative electrode plate, the negative electrode tab 14 does not overlap with the negative electrode active material region 121, avoiding an increase in the dimension of the electrode assembly 10 due to overlap between the negative electrode tab 14 and the negative electrode active material region 121, which is beneficial to increasing the volumetric energy density of the cell 100.

In an embodiment where the negative electrode tab 14 and the negative electrode plate 12 are separately disposed, when viewed along the thickness direction Z2 of the negative electrode plate, the negative electrode tab 14 overlaps with the first region 1211, thereby achieving electrical connection between the negative electrode tab 14 and the negative electrode plate 12, and the negative electrode tab 14 protrudes from an end of the first region 1211 of the negative electrode active material region 121 facing away from the second region 1212 along the width direction X2 of the negative electrode plate, facilitating the connection of the separately disposed negative electrode tab 14 and negative electrode plate 12. When viewed along the length direction Y2 of the negative electrode plate, the negative electrode tab 14 is disposed on a side of the negative electrode active material layer 123 facing away from the negative electrode current collector 122, a portion of the negative electrode active material layer 123 is stacked between the negative electrode tab 14 and the negative electrode current collector 122, and the negative electrode tab 14 and the negative electrode plate 12 are riveted to achieve electrical connection between the negative electrode tab 14 and the negative electrode plate 12. There are various methods for riveting the negative electrode tab 14 and the negative electrode plate 12, for example, along the thickness direction Z2 of the negative electrode plate, the negative electrode tab 14 is stacked on the side of the negative electrode active material layer 123 facing away from the negative electrode current collector 122, and a punch needle passes sequentially through the negative electrode tab 14, the negative electrode active material layer 123, the negative electrode current collector 122, and another negative electrode active material layer 123 from the side of the negative electrode tab 14 facing away from the negative electrode plate 12; during the process of the punch needle passing through the negative electrode tab 14 and the negative electrode plate 12, due to the ductility of the material of the negative electrode tab 14, a portion of the negative electrode tab 14 forms a second riveting portion, where the second riveting portion follows the punch needle to pass sequentially through the negative electrode active material layer 123, the negative electrode current collector 122, and the another negative electrode active material layer 123 and protrudes from the side surface of the negative electrode plate 12 facing away from the negative electrode tab 14. The portion of the second riveting portion protruding from the side surface of the negative electrode plate 12 facing away from the negative electrode tab 14 is flattened such that one end of the second riveting portion forms a second limiting portion pressing against the side surface of the negative electrode plate 12 facing away from the positive electrode tab 13, thereby achieving riveting of the negative electrode tab 14 and the negative electrode plate 12.

In some other embodiments, the negative electrode tab 14 and the negative electrode plate 12 may alternatively be riveted by a second rivet. The second rivet passes through the negative electrode tab 14 and the negative electrode plate 12, and both ends of the second rivet are flattened to form a third limiting structure pressing against the surface of the negative electrode tab 14 facing away from the negative electrode plate 12 and a fourth limiting structure pressing against the surface of the negative electrode plate 12 facing away from the negative electrode tab 14.

In some other embodiments, a second mounting groove may alternatively be provided on the negative electrode active material layer 123 on one side of the negative electrode current collector 122, where a depth of the second mounting groove is the same as the thickness of the negative electrode active material layer 123. The second mounting groove is configured to accommodate a portion of the negative electrode tab 14, and the negative electrode tab 14 protrudes from an end of the first region 1211 facing away from the second region 1212 along the width direction X2 of the negative electrode plate from the second mounting groove. The negative electrode tab 14 in the second mounting groove may be connected to the negative electrode current collector 122 to achieve the electrical connection between the negative electrode tab 14 and the negative electrode current collector 122. The negative electrode tab 14 and the negative electrode current collector 122 may be electrically connected by means such as conductive adhesive bonding or welding.

In some embodiments, along the width direction of the negative electrode current collector 122, the negative electrode current collector 122 has a coated region coated with the negative electrode active material layer 123 and an uncoated region not coated with the negative electrode active material layer 123, where the coated region of the negative electrode current collector 122 and the negative electrode active material layer 123 together form the negative electrode active material region 121 of the negative electrode plate 12, and at least a portion of the uncoated region of the negative electrode current collector 122 may form the negative electrode tab 14. For example, by die-cutting the uncoated region, the uncoated region of the negative electrode current collector 122 forms a plurality of negative electrode tabs 14 arranged at intervals, and a portion of the uncoated region of the negative electrode current collector 122 forms the negative electrode tab 14. During the die-cutting process, along the width direction of the negative electrode current collector 122, the die-cutting position may be aligned with the edge of the negative electrode active material layer 123 along the width direction of the negative electrode current collector 122, and the root of the negative electrode tab 14 is located at the edge of the coated region of the negative electrode current collector 122. During the die-cutting process, along the width direction of the negative electrode current collector 122, the die-cutting position may alternatively not be aligned with the edge of the negative electrode active material layer 123 along the width direction of the negative electrode current collector 122, reducing the risk of damaging the negative electrode active material layer 123 during die-cutting, and the negative electrode plate 12 includes the negative electrode active material region 121 and a portion of the uncoated region of the negative electrode current collector 122. Along the width direction of the negative electrode current collector 122, there is a distance between the root of the negative electrode tab 14 and the edge of the coated region of the negative electrode current collector 122. It should be noted that the width direction of the negative electrode current collector 122 is parallel to the width direction X2 of the negative electrode plate. The width direction X2 of the negative electrode plate is parallel to the width direction X1 of the positive electrode plate.

It should be noted that, along the length direction Y2 of the negative electrode plate, the negative electrode active material layer 123 may be applied on the negative electrode current collector 122 in a continuous coating manner or may be applied on the negative electrode current collector 122 in a gap coating manner.

When the positive electrode plate 11 is in an unfolded state, the width direction X1 of the positive electrode plate, the length direction Y1 of the positive electrode plate, and the thickness direction Z1 of the positive electrode plate are pairwise perpendicular. When the negative electrode plate 12 is in an unfolded state, the width direction X2 of the negative electrode plate, the length direction Y2 of the negative electrode plate, and the thickness direction Z2 of the negative electrode plate are pairwise perpendicular.

In an embodiment where the electrode assembly 10 is a wound structure, the width direction X1 of the positive electrode plate is parallel to the extension direction of the winding axis of the electrode assembly 10, and the width direction X2 of the negative electrode plate is parallel to the extension direction of the winding axis of the electrode assembly 10.

In some embodiments, the entire uncoated region of the negative electrode current collector 122 may form the negative electrode tab 14, thereby forming a full-tab cell.

In an embodiment where at least a portion of the uncoated region of the negative electrode current collector 122 forms the negative electrode tab 14, it may be understood that the negative electrode tab 14 and the negative electrode plate 12 are integrally formed.

The material of the negative electrode current collector 122 may be copper, and the negative electrode active material may be carbon, silicon, or the like.

The first region 1211 of the negative electrode active material region 121 is the portion of the negative electrode active material region 121 extending beyond the first end 1111 along the width direction of the negative electrode active material region 121, and the second region of the negative electrode active material region 121 is the portion of the negative electrode active material region 121 extending beyond the second end 1112 along the width direction of the negative electrode active material region 121.

E is the dimension of the first region 1211 along the width direction of the negative electrode plate 12. C is the dimension of the second region 1212 along the width direction of the negative electrode plate 12. E > C may be understood as E > (H₂ - H₁)/2, C < (H₂ - H₁)/2, that is, E > (H₂ - H₁)/2 > C, where H₁ is the width of the positive electrode active material region 111 along the width direction X1 of the positive electrode plate, and H₂ is the width of the negative electrode active material region 121 along the width direction X2 of the negative electrode plate.

As shown in FIGs. 1 to 3, the cell 100 further includes a housing 30, and the electrode assembly 10 is accommodated in the housing 30. The housing 30 forms an accommodation space. The accommodation space may be used to accommodate the electrode assembly 10, the electrolyte, or the like. The material of the housing 30 includes, but is not limited to, steel, aluminum, or copper. The housing 30 may be a hard shell, such as a steel shell, an aluminum shell, or a hard plastic shell. The housing 30 may alternatively be a soft shell, such as an aluminum-plastic film, thereby forming a pouch cell 100.

As shown in FIGs. 1 and 2, the positive electrode tab 13 connected to the positive electrode plate 11 may be stacked and bent within the housing 30 and then electrically connected to a first electrode lead 40, where a portion of the first electrode lead 40 is located within the housing 30, and another portion of the first electrode lead 40 extends out of the housing 30 to form a positive terminal of the cell 100. The first electrode lead 40 may be welded to a plurality of stacked positive electrode tabs 13.

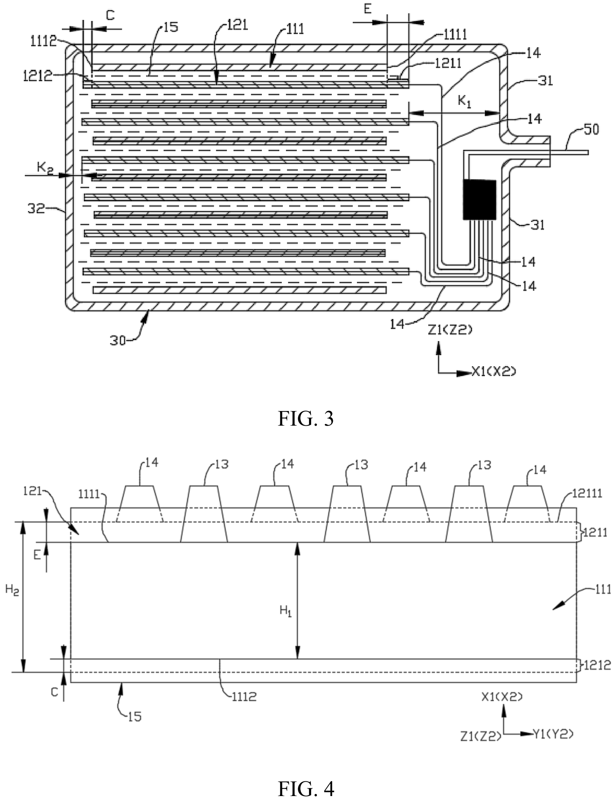

As shown in FIGs. 1 and 3, the negative electrode tab 14 connected to the negative electrode plate 12 may be stacked and bent within the housing 30 and then electrically connected to a second electrode lead 50, where a portion of the second electrode lead 50 is located within the housing 30, and another portion of the second electrode lead 50 extends out of the housing 30 to form a negative terminal of the cell 100. The second electrode lead 50 may be welded to a plurality of stacked negative electrode tabs 14.

The positive electrode tab 13 protrudes from the first end 1111 of the positive electrode active material region 111, the first end 1111 corresponds to a tab side of the positive electrode active material region 111, and the second end 1112 corresponds to a non-tab side of the positive electrode active material region 111; the first region 1211 of the negative electrode active material region 121 extends beyond the first end 1111, the negative electrode tab 14 is connected to the first region 1211, the first region 1211 corresponds to a tab side of the negative electrode active material region 121, and the second region 1212 corresponds to a non-tab side of the negative electrode active material region 121; and the width E of the first region 1211 and the width C of the second region 1212 meet E > C, to be specific, the width of the portion of the negative electrode active material region 121 on the tab side that extends beyond the tab side of the positive electrode active material region 111 is greater than the width of the portion of the negative electrode active material region 121 on the non-tab side that extends beyond the non-tab side of the positive electrode active material region 111. In this way, the position of the electrode assembly 10 within the housing 30 of the cell 100 may be adjusted, such that along the width direction X1 of the positive electrode plate, a distance between the first end 1111 and a wall portion of the housing 30 is greater than a distance between the second end 1112 and a wall portion of the housing 30. In this way, more space in the housing 30 is reserved for the electrolyte on the tab side of the negative electrode active material region 121 and the tab side of the positive electrode active material region 111 without increasing the volume of the housing 30, enabling the positive electrode plate 11 and the negative electrode plate 12 to be fully infiltrated, thereby endowing the cell 100 with relatively good cycling performance and endowing the cell 100 with a relatively high volumetric energy density.

In some embodiments, 1.05 ≤ E/C ≤ 10.

For example, E/C may be 1.05, 1.5, 2, 2.5, 3, 3.5, 4, 4.5, 5, 5.5, 6, 6.5, 7, 7.5, 8, 8.5, 9, 9.5, 10, or the like.

If E/C < 1.05, the degree to which the width of the portion of the negative electrode active material region 121 on the tab side extending beyond the tab side of the positive electrode active material region 111 is greater than the width of the portion of the negative electrode active material region 121 on the non-tab side extending beyond the non-tab side of the positive electrode active material region 111 is relatively small. Consequently, a distance between the first end 1111 and the wall portion of the housing 30 is relatively small, and space reserved in the housing 30 for the electrolyte on the tab side of the negative electrode active material region 121 and the tab side of the positive electrode active material region 111 is relatively small, increasing the risk that the positive electrode plate 11 and the negative electrode plate 12 may not be fully infiltrated. If E/C > 10, the width of the portion of the negative electrode active material region 121 on the tab side extending beyond the tab side of the positive electrode active material region 111 is much greater than the width of the portion of the negative electrode active material region 121 on the non-tab side extending beyond the non-tab side of the positive electrode active material region 111. Consequently, a distance between the first end 1111 and the wall portion of the housing 30 is excessively large and a distance between the second end 1112 and the wall portion of the housing 30 is excessively small. Moreover, the space reserved in the housing 30 for the electrolyte on the tab side of the negative electrode active material region 121 and the tab side of the positive electrode active material region 111 is relatively large, such that the amount of electrolyte accommodated exceeds the amount required for fully infiltrating the positive electrode plate 11 and the negative electrode plate 12, potentially leading to material and space waste; and the space reserved in the housing 30 for the electrolyte on the non-tab side of the negative electrode active material region 121 and the non-tab side of the positive electrode active material region 111 is relatively small, which may result in insufficient infiltration of the positive electrode plate 11 and the negative electrode plate 12 on the non-tab side of the negative electrode active material region 121 and of the non-tab side of the positive electrode active material region 111. Therefore, 1.05 ≤ E/C ≤ 10 ensures that the space reserved in the housing 30 for the electrolyte on the tab side and the non-tab side of the negative electrode active material region 121 and the space reserved in the housing 30 for the electrolyte on the positive electrode active material region 111 are both reasonable, enabling the positive electrode plate 11 and the negative electrode plate 12 to be fully infiltrated, endowing the cell 100 with relatively good cycling performance, reducing material waste, saving costs, and minimizing waste of internal space in the housing 30. In this way, the space within the housing 30 is fully utilized, thereby increasing the volumetric energy density of the cell 100.

In some embodiments, 1.1 ≤ E/C ≤ 4.

For example, E/C may be 1.1, 1.3, 2.1, 2.3, 2.7, 2.9, 3.1, 3.3, 3.7, 3.9, 4, or the like.

1.1 ≤ E/C ≤ 4 enables the cell 100 to have better cycling performance, further reduces material waste, further saves costs, and further minimizes waste of internal space in the housing 30. In this way, the space within the housing 30 is fully utilized, thereby increasing the volumetric energy density of the cell 100.

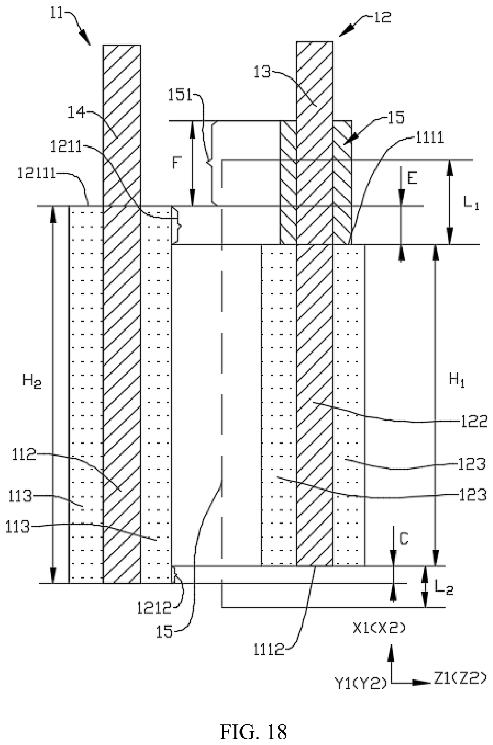

As shown in FIGs. 17 and 18, in some embodiments, the cell 100 further includes an insulating member 20, where at least a portion of the insulating member 20 is located between the first region 1211 and the positive electrode tab 13.

The insulating member 20 is configured to separate the first region 1211 and the positive electrode tab 13. The insulating member 20 may also be referred to as AT9. The material of the insulating member 20 may be adhesive tape, ceramic, or the like. The insulating member 20 may be disposed on the positive electrode tab 13 such that the insulating member 20 covers the surface of the positive electrode tab 13, for example, the insulating member 20 is adhered to the surface of the positive electrode tab 13 in the thickness direction of the positive electrode tab 13, or the insulating member 20 is coated on the surface of the positive electrode tab 13 in the thickness direction of the positive electrode tab 13.

Along the width direction X2 of the negative electrode plate, the insulating member 20 may extend beyond an end of the first region 1211 facing away from the second region 1212 to increase the coverage area of the insulating member 20, further reducing the risk of burrs on the positive electrode tab 13, negative electrode tab 14, and first region 1211 piercing the separator 15.

Along the width direction X2 of the negative electrode plate, an end of the insulating member 20 facing away from the positive electrode active material region 111 may be aligned with an end of the first region 1211 facing away from the second region 1212. It should be noted that "aligned" in some embodiments of the present application may not be absolutely aligned and may allow a certain range of error, such as an error range of 0 mm to 0.5 mm.

At least a portion of the insulating member 20 being located between the first region 1211 and the positive electrode tab 13 may separate the first region 1211 and the positive electrode tab 13, reduce the risk of short circuits caused by burrs on the positive electrode tab 13 piercing the separator 15 and thus leading to contact between the positive electrode tab 13 and the first region 1211, and improve the safety performance of the cell 100.

As shown in FIGs. 17 and 18, in some embodiments, along the width direction X2 of the negative electrode plate, the first region 1211 has a third end 12111 facing away from the second region 1212, and the insulating member 20 extends beyond the third end 12111 in a direction away from the positive electrode active material region 111.

Along the width direction X2 of the negative electrode plate, the insulating member 20 extends beyond the third end 12111 of the first region 1211 facing away from the second region 1212 in a direction away from the positive electrode active material region 111, enabling the insulating member 20 not only to separate the first region 1211 and the positive electrode tab 13 but also to separate the negative electrode tab 14 and the positive electrode tab 13, reducing the risk of short circuits caused by burrs on the positive electrode tab 13 or the negative electrode tab 14 piercing the separator 15 and thus leading to contact between the positive electrode tab 13 and the negative electrode tab 14, and further improving the safety performance of the cell 100.

In an embodiment where the insulating member 20 extends beyond the third end 12111 of the first region 1211 facing away from the second region 1212 in a direction away from the positive electrode active material region 111 along the width direction X2 of the negative electrode plate, the insulating member 20 has a third region 21 extending beyond the third end 12111, where a width the third region 21 is denoted as F, and 0 < (E + C)/2 - F ≤ 5 mm.

The width F of the third region 21 is the dimension of the third region 21 along the width direction X2 of the negative electrode plate.

(E + C)/2 - F may be equivalent to (H₂ - H₁)/2 - F. For example, (E + C)/2 - F may be 0.5 mm, 1 mm, 1.5 mm, 2 mm, 2.5 mm, 3 mm, 3.5 mm, 4 mm, 4.5 mm, 5 mm, or the like.

If (E + C)/2 - F > 5 mm, the width of the insulating member 20 is too large, and the insulating member 20 occupies excessive space, that is, occupying more space on the tab side that is intended for accommodating electrolyte, leading to a relatively high risk that the positive electrode plate 11 and the negative electrode plate 12 may not be fully infiltrated, and making it unfavorable for the cell 100 to achieve high volumetric energy density. Therefore, 0 < (E + C)/2 - F ≤ 5 mm not only may effectively separate the first region 1211 and the positive electrode tab 13, reduce the risk of short circuits in the cell 100 caused by the positive electrode tab 13 piercing the separator 15, but also may minimize the occupation of space for accommodating the electrolyte on the tab side. In this way, the positive electrode plate 11 and the negative electrode plate 12 may be better infiltrated by the electrolyte, improving the cycling performance of the cell 100, and facilitating a high volumetric energy density for the cell 100.

In some embodiments, 0.1 mm ≤ (E + C)/2 - F ≤ 1 mm.

That is, 0.1 mm ≤ (H₂ - H₁)/2 - F ≤ 1 mm. (E + C)/2 - F may be 0.1 mm, 0.2 mm, 0.4 mm, 0.6 mm, 0.8 mm, 1 mm, or the like.

If (E + C)/2 - F < 0.1 mm, the insulating member 20 maynot effectively separate the first region 1211 and the positive electrode tab 13; 0.1 mm ≤ (E + C)/2 - F ≤ 1 mm enables the insulating member 20 to effectively separate the first region 1211 and the positive electrode tab 13, reducing the risk of short circuits in the cell 100 caused by burrs on the positive electrode tab 13 piercing the separator 15, and also enabling the cell 100 to have a more optimal volumetric energy density.

As shown in FIGs. 17 and 18, in some embodiments, one end of the insulating member 20 is in contact with the first end 1111.

The end of the insulating member 20 closest to the positive electrode active material region 111 is in contact with the first end 1111.

The contact between one end of the insulating member 20 and the first end 1111 may be such that one end of the insulating member 20 is attached to the first end 1111, or one end of the insulating member 20 is connected to the first end 1111, for example, one end of the insulating member 20 is adhered to the first end 1111.

One end of the insulating member 20 being in contact with the first end 1111 may increase the coverage area of the insulating member 20, better separate the first region 1211 and the positive electrode tab 13, further reduce the risk of short circuits in the cell 100, and improve the safety performance of the cell 100.

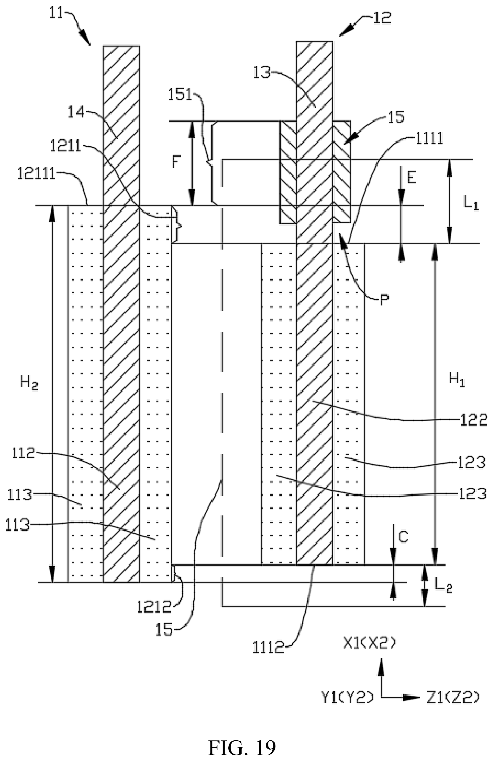

As shown in FIG. 19, in some other embodiments, along the width direction X1 of the positive electrode plate, an end of the insulating member 20 closest to the positive electrode active material region 111 may form a gap P with the first end 1111, such that during the arrangement of the insulating member 20, there is a certain distance between the end of the insulating member 20 closest to the positive electrode active material region 111 and the first end 1111, reducing the risk of damaging the positive electrode active material layer 113.

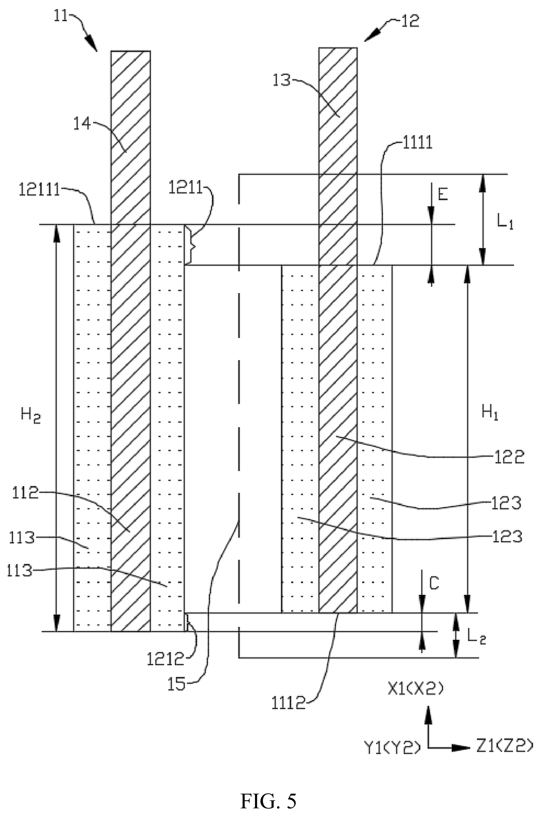

Certainly, in some other embodiments, the cell 100 may alternatively not include an insulating member 20 for separating the first region 1211 and the positive electrode tab 13 (as shown in FIGs. 4 and 5), which may reduce the occupation of internal space in the housing 30, reserving more space for the electrolyte, facilitating full infiltration of the positive electrode plate 11 and the negative electrode plate 12, and endowing the cell 100 with better cycling performance.

As shown in FIGs. 2 and 3, in some embodiments, the housing 30 has a first wall 31 and a second wall 32 arranged opposite to each other, the first end 1111 faces the first wall 31, and the second end 1112 faces the second wall 32; and a distance between the first region 1211 and the first wall 31 is denoted as K₁, a distance between the second region 1212 and the second wall 32 is denoted as K₂, and K₁ > K₂.

The first wall 31 and the second wall 32 are parts of the wall portion of the housing 30. The first wall 31 and the second wall 32 are arranged opposite to each other in the width direction X1 of the positive electrode plate. The distance K₁ between the first region 1211 and the first wall 31 is the distance between the third end 12111 of the first region 1211 facing away from the second region 1212 and the first wall 31 along the width direction X2 of the negative electrode plate. The distance K₂ between the second region 1212 and the second wall 32 is the distance between a fifth end of the second region 1212 facing away from the first region 1211 and the second wall 32 along the width direction X2 of the negative electrode plate.

The first end 1111 corresponds to the tab side of the positive electrode active material region 111, the second end 1112 corresponds to the non-tab side of the positive electrode active material region 111, the first region 1211 corresponds to the tab side of the negative electrode active material region 121, the second region 1212 corresponds to the non-tab side of the negative electrode active material region 121, and K₁ and K₂ meet K₁ > K₂, to be specific, the distance between the tab side of the negative electrode active material region 121 and the wall portion of the housing 30 is greater than the distance between the non-tab side of the negative electrode active material region 121 and the wall portion of the housing 30. In this way, more space in the housing 30 is reserved for the electrolyte on the tab side of the negative electrode active material region 121, enabling the positive electrode plate 11 and the negative electrode plate 12 to be fully infiltrated, thereby endowing the cell 100 with relatively good cycling performance and endowing the cell 100 with a relatively high volumetric energy density.

As shown in FIG. 2, in an embodiment where the cell 100 includes an insulating member 20, where at least a portion of the insulating member 20 is located between the first region 1211 and the positive electrode tab 13; and the insulating member 20 has a fourth end facing the first wall 31, a distance between the fourth end and the first wall 31 is denoted as K₃, and K₃ > K₂.

The fourth end is an end of the insulating member 20 facing away from the positive electrode active material layer 113 in the width direction X1 of the positive electrode plate. The distance K₃ between the fourth end and the first wall 31 is the distance between the fourth end and the first wall 31 along the width direction X1 of the positive electrode plate.

K₃ > K₂ ensures that more space in the housing 30 is reserved for the electrolyte on the tab side of the positive electrode active material region 111, enabling the positive electrode plate 11 and the negative electrode plate 12 to be fully infiltrated, thereby endowing the cell 100 with relatively good cycling performance.

As shown in FIGs. 5, 18, and 19, in some embodiments, the electrode assembly 10 further includes a separator 15, where the separator 15 is configured to separate the positive electrode plate 11 and the negative electrode plate 12, and along the width direction X1 of the positive electrode plate, a width of a portion of the separator 15 extending beyond the first end 1111 is denoted as L₁, a width of a portion of the separator 15 extending beyond the second end 1112 is denoted as L₂, and 0 < L₁ - L₂ ≤ 8 mm.

The positive electrode plate 11 and the negative electrode plate 12 are provided with a separator 15 therebetween for insulating and separating the positive electrode plate 11 and the negative electrode plate 12, so as to reduce the risk of short circuits in the cell 100. The material of the separator 15 may be PP (polypropylene, polypropylene) or PE (polyethylene, polyethylene), or the like.

The portion of the separator 15 extending beyond the first end 1111 along the width direction X1 of the positive electrode plate is defined as a fourth region, and L₁ is the dimension of the fourth region along the width direction X1 of the positive electrode plate. The portion of the separator 15 extending beyond the second end 1112 along the width direction X1 of the positive electrode plate is defined as a fifth region, and L₂ is the dimension of the fifth region along the width direction X1 of the positive electrode plate.

For example, L₁ - L₂ may be 1 mm, 2 mm, 3 mm, 4 mm, 5 mm, 6 mm, 7 mm, 8 mm, or the like.

0 < L₁ - L₂, that is, L₁ > L₂, since the width E of the first region 1211 of the negative electrode active material region 121 extending beyond the first end 1111 and the width C of the second region 1212 extending beyond the second end 1112 meet E > C, L₁ > L₂ ensures that the width of the portion of the separator 15 extending beyond the first end 1111 and the width of the portion of the separator 15 extending beyond the second end 1112 match the width of the first region 1211 and the width of the second region 1212, respectively, enabling the separator 15 to better separate the positive electrode plate 11 and the negative electrode plate 12, better mitigating the issue of a short circuit in the cell 100, thereby improving the safety performance of the cell 100.

If L₁ - L₂ > 8 mm, the dimension of the separator 15 in the width direction X1 of the positive electrode plate is too large, and the separator occupies excessive space inside the housing 30, which is unfavorable for full infiltration of the positive electrode plate 11 and the negative electrode plate 12 and for the cell 100 to achieve high energy density. Therefore, L₁ - L₂ ≤ 8 mm enables the separator 15 to effectively separate the positive electrode plate 11 and the negative electrode plate 12, reduces the risk of short circuits in the cell 100, and also minimizes the dimension of the separator 15 in the width direction X1 of the positive electrode plate. In this way, the space occupied by the separator 15 inside the housing 30 is minimized, and the housing 30 has more space for the electrolyte inside, facilitating full infiltration of the positive electrode plate 11 and the negative electrode plate 12, improving the cycling performance of the cell 100, and facilitating a high energy density for the cell 100.

In some embodiments, 1 mm ≤ L₁ - L₂ ≤ 3 mm.

For example, L₁ - L₂ may be 1 mm, 1.3 mm, 1.5 mm, 1.7 mm, 2.3 mm, 2.5 mm, 2.7 mm, 3 mm, or the like.

1 mm ≤ L₁ - L₂ ≤ 3 mm enables the separator 15 to more effectively separate the positive electrode plate 11 and the negative electrode plate 12, further reduces the risk of short circuits in the cell 100, and also minimizes the dimension of the separator 15 in the width direction X1 of the positive electrode plate. In this way, the space occupied by the separator 15 inside the housing 30 is minimized, and the housing 30 has more space for the electrolyte inside, facilitating full infiltration of the positive electrode plate 11 and the negative electrode plate 12, endowing the cell 100 with better cycling performance, and facilitating a high energy density for the cell 100.

An embodiment of the present application further provides an electric device, where the electric device includes the cell 100 provided in any of the above embodiments.

The above are only preferred embodiments of the present application and are not intended to limit the present application. For those skilled in the art, various modifications and changes may be made to the present application. Any modifications, equivalent substitutions, improvements, or the like, made within the spirit and principles of the present application shall be included within the scope of protection of the present application.

## Claims

1. A cell comprising:
an electrode assembly comprising a positive electrode plate, a negative electrode plate, a positive electrode tab, and a negative electrode tab, wherein the positive electrode tab is electrically connected to the positive electrode plate, the negative electrode tab is electrically connected to the negative electrode plate, the positive electrode plate comprises a positive electrode active material region, and the negative electrode plate comprises a negative electrode active material region;
along a width direction of the positive electrode plate, the positive electrode active material region has a first end and a second end opposite to each other, and the positive electrode tab protrudes from the first end; and
along a width direction of the negative electrode plate, the negative electrode active material region has a first region extending beyond the first end and a second region extending beyond the second end, the negative electrode tab is connected to the first region, a width of the first region is denoted as E, a width of the second region is denoted as C, and E > C.

2. The cell according to claim 1, wherein 1.05 ≤ E/C ≤ 10.

3. The cell according to claim 2, wherein 1.1 ≤ E/C ≤ 4.

4. The cell according to claim 1, wherein the cell further comprises an insulating member, wherein at least a portion of the insulating member is located between the first region and the positive electrode tab.

5. The cell according to claim 4, wherein along the width direction of the negative electrode plate, the first region has a third end facing away from the second region, and the insulating member extends beyond the third end in a direction away from the positive electrode active material region.

6. The cell according to claim 5, wherein along the width direction of the negative electrode plate, the insulating member has a third region extending beyond the third end, wherein a width of the third region is denoted as F, and 0 < (E + C)/2 - F ≤ 5 mm.

7. The cell according to claim 6, wherein 0.1 mm ≤ (E + C)/2 - F ≤ 1 mm.

8. The cell according to claim 4, wherein one end of the insulating member is in contact with the first end.

9. The cell according to claim 1, wherein the cell further comprises a housing, the electrode assembly is accommodated in the housing, the housing has a first wall and a second wall arranged opposite to each other, the first end faces the first wall, and the second end faces the second wall; and
a distance between the first region and the first wall is denoted as K₁, a distance between the second region and the second wall is denoted as K₂, and K₁ > K₂.

10. The cell according to claim 9, wherein the cell further comprises an insulating member, wherein at least a portion of the insulating member is located between the first region and the positive electrode tab; and
the insulating member has a fourth end facing the first wall, a distance between the fourth end and the first wall is denoted as K₃, and K₃ > K₂.

11. The cell according to claim 1, wherein the electrode assembly further comprises a separator, wherein the separator is configured to separate the positive electrode plate and the negative electrode plate, along the width direction of the positive electrode plate, a width of a portion of the separator extending beyond the first end is denoted as L₁, a width of a portion of the separator extending beyond the second end is denoted as L₂, and 0 < L₁ - L₂ ≤ 8 mm.

12. The cell according to claim 11, wherein 1 mm ≤ L₁ - L₂ ≤ 3 mm.

13. An electric device comprising the cell according to any one of claims 1 to 12.
